# EUROPÄISCHE PATENTSCHRIFT

(11) **EP 0 581 019 B1**
(45) Veröffentlichungstag und Bekanntmachung des Hinweises auf die Patenterteilung: **22.05.1996**
(21) Anmeldenummer: 93110105.9
(22) Anmeldetag: 24.06.1993
(51) Int. Cl.: B41F 27/10, B41N 10/04, B41F 7/04, B41F 13/08, F16C 13/00

(54) **Gummituch einer Offsetdruckmaschine**
Blanket for offset printing machine
Blanchet pour machine à imprimer en offset

(30) Priorität: 07.07.1992 US 909729
(43) Veröffentlichungstag der Anmeldung: 02.02.1994
(73) Patentinhaber: Heidelberger Druckmaschinen Aktiengesellschaft, D-69019 Heidelberg (DE)
(72) Erfinder: Vrotacoe, James B., Dover, New Hampshire 03835 (US)
(74) Vertreter: Stoltenberg, Baldo Heinz-Herbert

(56) Entgegenhaltungen:
- EP-A- 0 076 777
- EP-A- 0 225 509
- EP-A- 0 342 573
- EP-A- 0 366 395
- EP-A- 0 421 145
- EP-A- 0 514 344
- US-A- 3 146 709

## Beschreibung

Die vorliegende Erfindung betrifft das Gummituch einer Offsetdruckmaschine.

Die Druckwerke einer Offsetdruckmaschine weisen eine Anzahl drehbarer Zylinder, im besonderen einen Plattenzylinder und einen Gummituchzylinder, auf. Der Plattenzylinder trägt eine eine Druckplatte, worauf das Druckbild festgelegt ist. Der Gummituchzylinder trägt ein Druckgummituch. Das eingefärbte Druckbild wird beim Drehen der Zylinder in dem Spalt zwischen dem Plattenzylinder und dem Gummituchzylinder von der Platte auf dem Plattenzylinder auf das Gummituch auf dem Gummituchzylinder übertragen. Von dem Gummituch auf dem Gummituchzylinder wird danach das eingefärbte Druckbild auf das zu bedruckende Material, z. B. eine Papierbahn, übertragen.

Das eingefärbte Druckbild wird von der Druckplatte bei jeder Umdrehung des Plattenzylinders und des Gummituchzylinders auf das Gummituch übertragen. Dabei kann nach der übertragung des eingefärbten Druckbildes von dem Gummituch auf das zu bedruckende Material eine kleine Menge Farbe auf der Oberfläche des Gummituchs verbleiben. Wird das eingefärbte Druckbild auf der Druckplatte bei jeder Umdrehung der Zylinder auf die gleiche Stelle auf der Oberfläche des Gummituchs übertragen, dann können solche kleinen Farbmengen sich an dieser Stelle anhäufen und das Druckbild entstellen (siehe z.B. EP-A-0342573).

Nach der vorliegenden Erfindung weist ein Druckwerk einer Offsetdruckmaschine zum Drucken eines eingefärbten Druckbildes auf Bogenmaterial einen drehbaren Plattenzylinder und einen drehbaren Gummituchzylinder auf. Der Plattenzylinder weist eine Haltevorrichtung für die Druckplatte mit dem eingefärbten Druckbild auf. Das hülsenförmige Gummituch wird in teleskopischer Weise auf den Gummituchzylinder aufgebracht (siehe z.B. EP-A-0421145).

Ferner weist das Druckwerk einen Rahmen und eine Antriebsvorrichtung auf. Der Plattenzylinder und der Gummituchzylinder sind auf dem Rahmen so gelagert, daß das eingefärbte Druckbild in dem Zylinderspalt von einer Druckplatte auf dem Plattenzylinder auf das Gummituch auf dem Gummituchzylinder übertragen wird, während der Plattenzylinder und der Gummituchzylinder durch die Antriebsvorrichtung rotiert werden. Das hülsenförmige Gummituch ist auf dem Gummituchzylinder in einer Weise angebracht, daß dieses in einem Verhältnis zu dem Gummituchzylinder rotiert, wenn die Zylinder im Druckbetrieb durch die Antriebsvorrichtung rotiert werden.

Ein nach der vorliegenden Erfindung konstruiertes Druckwerk wirkt einer Anhäufung von Farbe auf der Oberfläche des Gummituchs entgegen. Das Gummituch ist hülsenförmig und so angebracht, daß es sich während des Druckbetriebs in einem Verhältnis zu dem Gummituchzylinder dreht. Daraus ergibt sich eine allmähliche Verschiebung des sich durch den Zylinderspalt bewegenden Flächenanteils des Gummituchs, wenn sich das eingefärbte Druckbild auf der Druckplatte durch den Zylinderspalt bewegt. Somit ändert sich während des Druckbetriebs allmählich der Flächenbereich des Gummituchs, auf den das eingefärbte Druckbild von der Druckplatte übertragen wird. Dieses Druckwerk vermeided also eine Anhäufung von Farbe, was anderweitig geschehen würde, wenn das eingefärbte Druckbild immer wieder auf dieselbe Stelle der Gummituchfläche übertragen werden würde.

Diese und andere Merkmale der Erfindung werden durch die folgende Beschreibung bevorzugter Ausführungsbeispiele im Zusammenhang mit den beigefügten, nachstehend erläuterten Zeichnungen weiter verdeutlicht.
- Fig. 1: ist eine schematische Darstellung eines Druckwerks nach der vorliegenden Erfindung;
- Fig. 2: ist eine schematische Darstellung von in Fig. 1 gezeigten Komponenten;
- Fig. 3: ist eine Schnittansicht von in Fig. 1 gezeigten Komponenten;
- Fig. 4: ist ebenfalls eine teilweise Schnittansicht von in Fig. 1 gezeigten Komponenten; und
- Fig. 5: is eine schematische Darstelling von in Fig. 1 gezeigten Komponenten.

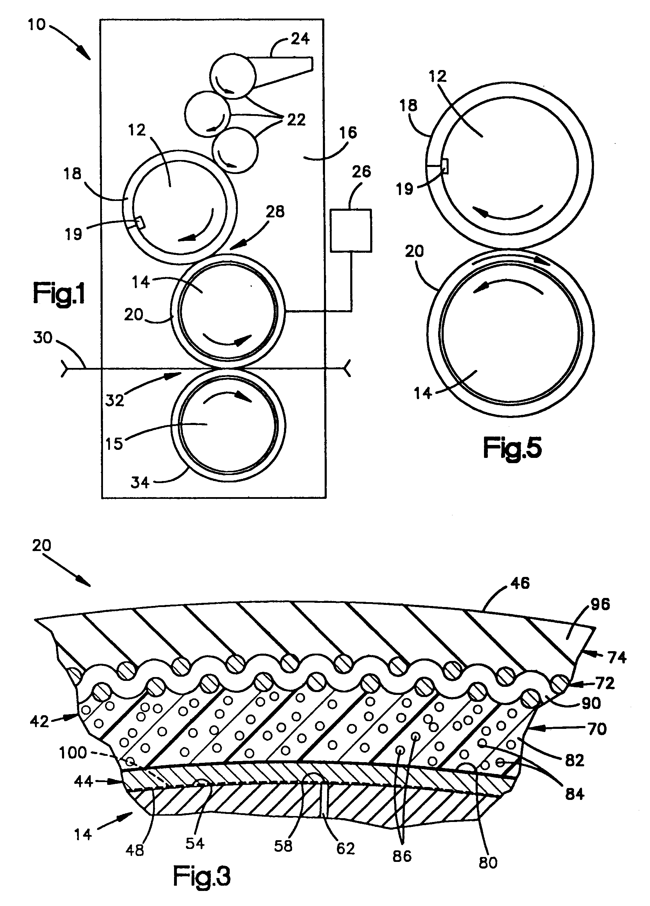

In Fig. 1 ist ein nach der vorliegenden Erfindung konstruiertes Druckwerk 10 schematisch dargestellt. Das Druckwerk 10 ist z. B. ein lithographisches Offsetdruckwerk mit einem Plattenzylinder 12, einen Gummituchzylinder 14 und einem Druckzylinder 15, welche mit ihren jeweiligen gegenüberliegenden Enden in einem Paar Seitenrahmen 16 drehbar gelagert sind, und einer der Seitenrahmen 16 ist ersichtlich in Fig. 1.

Der Plattenzylinder 12 trägt eine Druckplatte 18, auf welcher ein zu druckendes Bild definiert ist. Die Druckplatte 18 besteht aus einer dünnen Metallplatte und wird auf dem Plattenzylinder 12 angebracht, indem die Platte um den Plattenzylinder 12 gewunden wird. In herkömmlicher Weise hält ein Klemmechanismus 19 in dem Plattenzylinder 12 die Druckplatte auf dem Plattenzylinder 12 fest. Der Gummituchzylinder 14 trägt ein Druckgummituch 20. Das Gummituch ist als Hülse gestaltet und wird auf dem Gummituchzylinder 14 angebracht, indem es teleskopisch über diesen geschoben wird.

Das Druckwerk 10 umfaßt auch Farbwalzen 22, einen Farbkasten 24 und einen Motor 26. Der Motor 26 treibt einen Getriebezug (nicht gezeigt), welcher mit den Zylindern und Walzen in dem Druckwerk 10 verbunden ist und diese dreht, wie durch den in Fig. 1 gezeigten Pfeil angedeutet. Der Motor 26 und der Getriebezug können in herkömmlicher Art konstruiert sein.

Mit der Umdrehung der Zylinder und Walzen durch den Motor 26 und den Getriebezug übertragen die Farbwalzen 22 Farbe von dem Farbkasten 24 auf die Druckplatte 18 auf dem Plattenzylinder 12. Die Druckplatte 18 überträgt das sich auf diesem befindliche eingefärbte Druckbild auf das Gummituch 20 auf dem Gummituchzylinder 14 in dem Spalt 28 zwischen dem Plattenzylinder 12 und dem Gummituchzylinder 14. Das Gummituch 20 überträgt anschließend das eingefärbte Druckbild auf das zu bedruckende Material, welches vorzugsweise eine sich durch den Spalt 32 zwischen dem Gummituchzylinder 14 und dem Druckzylinder 15 bewegende Bahn ist. Wie in Fig. 1 gezeigt, ist der Druckzylinder 15 ein zweiter Gummituchzylinder, der ein zweites hülsenförmiges Druckgummituch 34 zum gleichzeitigen Drucken auf der gegenüberliegenden Seite der Bahn 30 trägt.

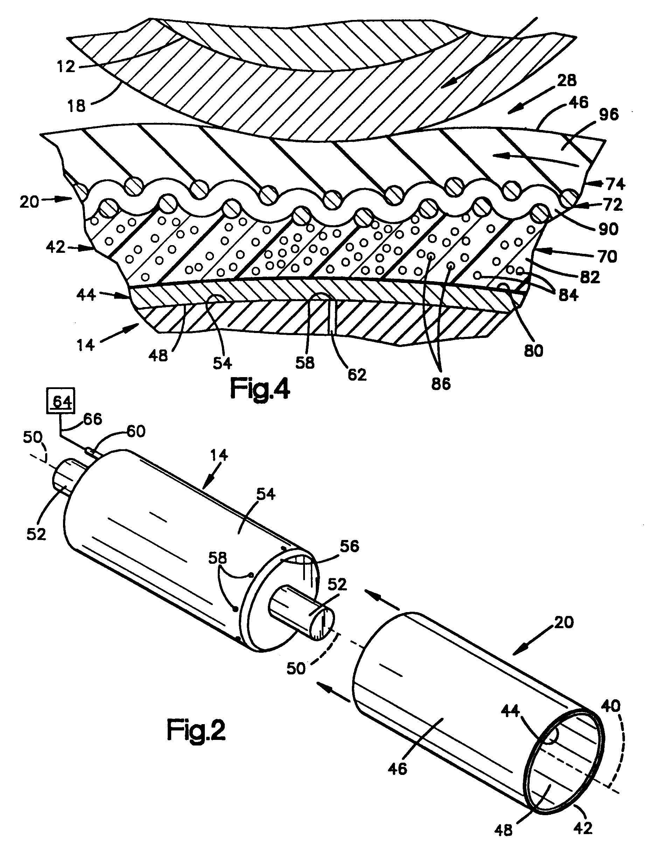

Wie schematisch in Fig. 2 gezeigt, hat das Gummituch 20 eine Mittelachse 40, einen Druckbereich 42 und eine stützende Hülse 44. Der Druckbereich 42 ist elastisch und hat eine zylindrische Form mit einer spaltlosen äußeren Druckfläche 46. Die Hülse 44 ist ziemlich steif und hat eine spaltlose, zylindrische innere Lagerungsfläche 48. In der bevorzugten Ausgestaltung der Erfindung besteht die Hülse 44 aus Nickel.

Ebenfalls in Fig. 2 schematisch gezeigt ist der Gummituchzylinder 14. Der Gummituchzylinder 14 hat eine Mittelachse 50 und ein Paar Stummelwellen 52 zur Lagerung, so daß dieser sich um die Achse 50 in dem Druckwerk 10 dreht. Der Gummituchzylinder 14 hat auch eine zylindrische Außenfläche 54 mit einer abgerundeten Kante 56 an dessen einem axialen Ende. Der Gummituchzylinder 14 hat einen Außendurchmesser, welcher geringfügig größer ist als der Innendurchmesser der Hülse 44 in dem Gummituch 20. Der Gummituchzylinder 14, dessen abgeschrägte Kante 56 sich von der Außenfläche 54 radial nach innen neigt, hat an seinem radialen inneren Ende einen Durchmesser, welcher geringfügig kleiner ist als der Innendurchmesser der Hülse 44. Der Gummituchzylinder 14 weist ferner an seiner Außenfläche 54 eine Anzahl Luftdurchflußöffnungen 58 auf. Diese Luftdurchflußöffnungen 58 sind in einer umfänglichen Reihe nahe an der abgeschrägten Kante 56 angeordnet und stehen über eine Anzahl Luftdurchlaßöffnungen 62 (Fig. 3, 4) in dem Gummituchzylinder 14 mit einer Lufteinlaßöffnung 60 in Verbindung. Die Lufteinlaßöffnung 60 steht wahlweise über eine Luftdruckleitung 66 mit einer Luftdruckquelle 64 in Verbindung.

Wie durch einen Pfeil in Fig. 2 angedeutet, kann das Gummituch 20 teleskopisch über dem Gummituchzylinder 14 angebracht werden. Da der Außendurchmesser des Gummituchzylinders 14 geringfügig größer ist als der Innendurchmesser der Hülse 44 in dem Gummituch 20, erweitert sich die Hülse 44 zwangsläufig in ihrem Durchmesser, wenn sie in axialer Richtung auf die zylindrische Außenfläche 54 zu und gegen die abgeschrägte Kante 56 bewegt wird. Wenn das innere Flächenteil 48 der Hülse 44 axial über die sich an der Außenfläche 54 des Gummituchzylinders 14 befindlichen Luftdurchflußöffnungen 58 bewegt wird, wird der Luftdruck von der Quelle 64 auf die Luftdurchflußöffnungen 58 gerichtet. Druckluft strömt dann radial aus den Öffnungen 58, trifft auf die Innenfläche 48 der Hülse 44 auf und dehnt diese in ihrem Durchmesser weiter aus.

Die auf die Innenfläche 48 der Hülse 44 gerichtete Druckluft dehnt die Hülse 44 kontinuierlich, während diese axial über die Außenfläche 54 des Gummituchzylinders 14 bewegt wird. Nachdem das Gummituch 20 in seine Anlegeposition auf dem Gummituchzylinder 14 gebracht wurde, fällt der Luftdruck ab. Die Hülse 44 in dem Gummituch 20 verengt sich in ihrem Durchmesser und legt sich elastisch gegen die Außenfläche 54 des Gummituchzylinders 14. Das Gummituch 20, dessen ursprünglicher Innendurchmesser geringer ist als der Außendurchmesser des Gummituchzylinders 14, ist somit auf dem Gummituchzylinder 14 in überlagerter Paßform installiert.

Das Gummituch 20 wird wiederum durch die Dehnung der Hülse 44 in ihrem Durchmesser unter der Einwirkung von Luftdruck und durch axiales Herunterschieben des Gummituchs 20 von dem Gummituchzylinder 14, wenn dieses in einem gedehnten Zustand ist, entfernt. Das Nickelmaterial der Hülse 44 hat die optimale Elastizität für das Installieren und Entfernen des Gummituchs 20 in der oben beschriebenen Art und Weise, wenn es einem herkömmlichen Luftdruck von 61,8 N/cm² (6,3 kp/cm²; 90 pounds per square inch) unterworfen wird.

Wie zum Teil in Fig. 3 gezeigt, wird bei der oben beschriebenen Installierung in überlagerter Paßform die Innenfläche 48 des Gummituchs 20 in Reibkontakt mit der Außenfläche 54 des Gummituchzylinders 14 gleichmäßig über dessen Umfang gepreßt. Wie aus Fig. 3 auch ersichtlich ist, besteht der Druckbereich 42 des Gummituchs 20 aus Schichten. In der in den Zeichnungen dargestellten Ausführungsform der Erfindung besteht der Druckbereich 42 aus Schichten, welche den in dem U.S. Patent Nr. 3,700,541 (Shrimpton et al) offenbarten Schichten ähnlich sind. Somit besteht der Druckbereich 42 des Gummituchs 20 aus einer zusammenpreßbaren Schicht 70, einer verstärkenden Schicht 72 und aus einer Druckschicht 74.

Die zusammenpreßbare Schicht 70 in dem Druckbereich 42 des Gummituchs 20 ist durch eine Klebstoffverbindung 80 an der Hülse 44 befestigt und umfaßt einen Körper 82 aus gummiartigem Material. Der Körper 82 aus gummiartigem Material besitzt gleichmäßig darin verteilte Mikrozellen 84, welche dem Körper 82 Kompressibilität verleiht. Die Mikrozellen entstehen durch das Integrieren von zusammenpreßbaren, hohlen Mikrosphären 86 in das gummiartige Material des Körpers 82. Der gummiartige Körper 82 könnte auch durch Integrieren eines anderen Materials als Mikrosphären 86, z. B. mit Stücken von in dem U.S. Patent 3,887,750 an Duckett et al gezeigten zusammenpreßbaren Fäden zusammenpreßbar gestaltet werden. Alternativ könnte der Körper 82 mit bekannten Methoden der Hohlraumerzeugung, wie z.B. durch in dem U.S. Patent 4,025,685 an Haran et al gezeigtes Blasen und Auslaugen, zusammendrückbar gestaltet werden.

Die verstärkende Schicht 72 in dem Druckbereich 42 des Gummituchs 20 besteht aus einem Gewebe 90, das mit einem Polymergemisch abgebunden ist. Die Druckschicht 72 besteht aus einem Körper 96 aus gummiartigem Material und formt die äußere Druckfläche 46 des Gummituchs 20. Im Gegensatz zu der in dem U.S. Patent 3,700,541 an Shrimpton et al offenbarten Druckschicht ist die Druckschicht 74 zylindrisch, und die äußere Druckfläche 46 ist eine kontinuierliche, spaltlose zylindrische Fläche, die sich umfänglich um das ganze Gummituch 20 erstreckt.

Wenn die Walzen und Zylinder in dem Druckwerk 10 durch den in Fig. 1 gezeigten Motor 26 gedreht werden, bewegt sich die Druckplatte 18 auf dem Plattenzylinder 12 gegen das Gummituch 20 auf dem Gummituchzylinder 14 in dem Spalt 28 zwischen dem Plattenzylinder 12 und dem Gummituchzylinder 14. Wie in Fig. 4 gezeigt, ist das Gummituch 20 eingedrückt wo die Druckplatte 18 in dem Walzenspalt 28 gegen dieses drückt. Die zusammenpreßbare Schicht 70 in dem Gummituch 20 wird unterhalb der eingedrückten Anteile der Druckschicht 74 und der verstärkenden Schicht 72 zusammengepreßt. Somit erlaubt die zusammenpreßbare Schicht 70 eine Verlagerung der Druckschicht 74 und der verstärkenden Schicht 72 radial nach innen, so daß die Druckfläche 46 der Druckschicht 74 an beiden Seiten des Walzenspalts 28 nicht radial nach außen ausbeult. Würde die Druckfläche 46, außer radial nach innen eingedrückt zu werden, auch radial nach außen ausbeulen, wie in Fig. 4 gezeigt, könnte durch eine solche Verformung der Druckfläche 46 das von der Druckplatte 18 auf das Gummituch 20 übertragene eingefärbte Druckbild verschmiert werden, wie dies vom Stand der Technik bekannt ist.

Wie in den Fig. 1 und 4 gezeigt, rotieren der Plattenzylinder 12 im Uhrzeigersinn und der Gummituchzylinder 14 entgegen dem Uhrzeigersinn, und zwar bei gleicher Drehzahl pro Minute. Die Druckplatte 18 ist auf dem Plattenzylinder 12 unbeweglich angebracht und rotiert deshalb mit der gleichen Drehzahl wie der Plattenzylinder 12. Jedoch ist das Gummituch 20 auf dem Gummituchzylinder 14 nicht unbeweglich angebracht. Vielmehr weist das auf dem Gummituchzylinder 14 angebrachte Gummituch 20 einen Festsitz zwischen der Innenfläche 48 des Gummituchs 20 und der Außenfläche 54 des Gummituchzylinders 14 auf. Die radiale Festigkeit des Festsitzes erstellt eine Normalkraft zwischen der Innenfläche 48 und der Außenfläche 54. Dies ergibt eine Reibkraft, die einer Bewegung der Innenfläche 48 und der Außenfläche 54 relativ zueinander entgegensteht. Die Reibkraft entspricht dem Ergebnis der Normalkraft und ist der Reibfaktor zwischen diesen Flächen. Die Innenfläche 48 kann umfänglich in Schiebekontakt mit der Außenfläche 54 bewegt werden, wenn auf diese eine entsprechende Kraft ausgeübt wird, um die bewegungshemmende Reibkraft zwischen den Flächen zu überwinden.

Wie hieroben im Zusammenhang mit Fig. 4 beschrieben, drückt die Druckplatte 18 in dem Spalt 28 gegen das Gummituch 20. Somit übt die Druckplatte 18 in dem Spalt 28 eine Kraft auf das Gummituch 20 aus. Das andere Gummituch 34 auf dem Druckzylinder 15 drückt in dem Spalt 32 (Fig. 1) in ähnlicher Weise gegen das Gummituch 20. Somit übt dieses andere Gummituch 34 in dem Spalt 32 auch eine Kraft auf das Gummituch 20 aus. Die Reibkraft, welche einer Bewegung zwischen der Innenfläche 48 des Gummituchs 20 und der Außenfläche 54 des Gummituchzylinders 14 entgegensteht, ist so bemessen, daß die von dem Plattenzylinder 18 und dem anderen Gummituch 34 auf das Gummituch 20 ausgeübten Kräfte genügen, um den Reibungswiderstand gegen eine Bewegung zwischen diesen Flächen zu überwinden. Die durch die Druckplatte 18 und das andere Gummituch 34 auf das Gummituch 20 ausgeübten Kräfte sind somit groß genug, um zu bewirken, daß während des Druckvorgangs die Innenfläche 48 umfänglich in Schiebekontakt mit der Außenfläche 54 bewegt wird. Solche Kräfte zwingen das Gummituch 20 zu einer Verlangsamung relativ zu dem Gummituchzylinder 14 und bewirken somit, daß sich das Gummituch 20 relativ zu dem Gummituchzylinder 14 in die mit dem in Fig. 5 gezeigten Pfeil angedeutete Richtung nach rechts, das heißt, entgegen der Drehrichtung des Gummituchzylinders 14, bewegt. Somit rotiert das Gummituch 20 mit einer etwas geringeren Drehzahl pro Minute als der Gummituchzylinder 14, der Plattenzylinder 12 und die Druckplatte 18.

Der Unterschied zwischen den Oberflächengeschwindigkeiten des Gummituchs 20 und der Druckplatte 18 ist gering, da das Gummituch 20 relativ zu dem Gummituchzylinder 14 nur eine geringfügige Kriechbewegung macht. In der in den Zeichnungen dargestellten bevorzugten Ausführung der Erfindung hat die Hülse 44 in dem Gummituch 20 eine Dicke von 0,127 mm und die Innenfläche 48 der Hülse 44 hat einen Innendurchmesser von 16,626 cm, wenn das Gummituch 20 nicht auf dem Gummituchzylinder 14 installiert ist. Die Außenfläche 54 des Gummituchzylinders 14 hat einen Durchmesser von 16,648 cm. Somit weisen das Gummituch 20 und der Gummituchzylinder 14 eine anfängliche diametrale Überlagerung von 0,216 mm auf. Wenn das Gummituch 20 auf dem Gummituchzylinder 14 installiert ist, entsteht durch diese anfängliche diametrale Überlagerung, zusammen mit dem Reibfaktor zwischen dem Gummituch 20 und dem Gummituchzylinder 14, eine Reibkraft, die einer Bewegung zwischen den Flächen 48 und 54 widersteht. Diese Reibkraft ist größer als die in den Zylinderspalten 28 und 32 auf das Gummituch 20 ausgeübten Kräfte, und zwar in dem Maße, daß sich während des Druckvorgangs das Gummituch 20 relativ zu dem Gummituchzylinder 14 umfänglich zwischen 25 mm und 50 mm pro 100 000 Umdrehungen des Gummituchzylinders 14 bewegt. Somit würde sich das Gummituch pro Stunde zwischen 25 mm und 50 mm bewegen, wenn das Druckwerk 10 mit einer Maschinengeschwindigkeit von 914 m pro Minute läuft, und es würde sich insgesamt ungefähr 20,32 cm in einer 8-Stunden-Schicht bewegen. Wenn das Gummituch 20 umfänglich 20,32 cm um den Gummituchzylinder 14 in einer 8-Stunden-Schicht bewegt wird, so wird die Stelle auf dessen Druckfläche 46, worauf das eingefärbte Druckbild übertragen ist, umfänglich ebenfalls 20,32 cm um die Druckfläche 46 bewegt. Dieses allmähliche Ändern der Stelle auf der Druckfläche 46, worauf das eingefärbte Druckbild übertragen wird, verhindert eine Anhäufung von Farbe auf der Druckfläche 46. Solche eine Farbanhäufung könnte sich bilden, wenn das eingefärbte Druckbild während des ganzen Druckvorgangs immer wieder auf dieselbe Stelle auf der Druckfläche 46 übertragen werden würde.

Die der Bewegung des Gummituchs 20 relativ zu dem Gummituchzylinder 14 entgegengesetzte Reibkraft kann eingestellt und dadurch das Maß der Bewegung des Gummituchs 20 relativ zu dem Gummituchzylinder 14 gesteuert werden. Die Reibkraft kann durch Änderung der normalen Kraft und durch Änderung des Reibfaktors zwischen dem Gummituch 20 und dem Gummituchzylinder 14 eingestellt werden. Die normale Kraft kann durch Änderung der anfänglichen diametralen Überlagerung geändert werden. Der Reibfaktor kann durch Änderung der Struktur der Flächen 48 und/oder 54, wie durch Polieren, Schleifen, etc., geändert werden. Der Reibfaktor kann auch durch die Verwendung eines die Reibung erhöhenden oder die Reibung vermindernden Materials zwischen den Flächen 48 und 54 geändert werden. Wie z.B. schematisch in gebrochenen Linien in Fig. 3 dargestellt, kann eine Beschichtung 100 mit einem vorbestimmten Reibfaktor auf einer oder auf beiden der Flächen 48 und 54 angebracht werden.

Die obige Beschreibung der Erfindung kann den Experten zu Verbesserungen, Änderungen und Modifikationen anregen, die in den Rahmen der Erfindung fallen und mit den anhängenden Patentansprüchen zu decken sind.

### BEZUGSZEICHENLISTE

- 10: Druckwerk
- 12: Plattenzylinder
- 14: Gummituchzylinder
- 15: Druckzylinder
- 16: Seitenrahmen
- 18: Druckplatte
- 19: Klemmechanismus
- 20: Gummituch (Hülse)
- 22: Farbwalzen
- 24: Farbkasten
- 26: Motor
- 28: Zylinderspalt
- 30: Bahn
- 32: Zylinderspalt
- 34: Gummituch
- 40: Mittelachse (Gummituch 20)
- 42: Druckbereich
- 44: Hülse (Gummituch 20)
- 46: äußere Druckfläche
- 48: zylindrische Innenfläche
- 50: Mittelachse (Gummituchzylinder 14)
- 52: Stummelwellenpaar
- 54: zylindrische Außenfläche des Gummituchzylinders 14
- 56: abgerundete Kante
- 58: Luftdurchflußöffnungen
- 60: Lufteinlaßöffnung
- 62: Luftdurchlaßöffnungen
- 64: Luftdruckquelle
- 66: Luftdruckleitung
- 70: zusammenpreßbare Schicht
- 72: verstärkende Schicht
- 74: Druckschicht
- 80: Klebstoffverbindung
- 82: Körper aus gummiartigem Material
- 84: Mikrozellen
- 86: Mikrosphären
- 90: Gewebe (verstärkende Schicht 72)
- 96: Körper aus gummiartigem Material
- 100: Beschichtung

## Patentansprüche

1. Offsetdruckwerk (10) für das Drucken eines eingefärbten Druckbildes auf eine Bogenmaterialbahn (30), welches die folgenden Merkmale aufweist:
einen rotierbaren Plattenzylinder (12) mit einem Mechanismus (19) zum Aufspannen einer Druckplatte (18), worauf ein eingefärbtes Druckbild festgelegt ist;
einen rotierbaren Gummituchzylinder (14);
ein hülsenförmiges Gummituch (20), das teleskopisch über den genannten Gummituchzylinder (14) angebracht wird;
Rahmen (16) zum Lagern des genannten Plattenzylinders (12) und des genannten Gummituchzylinders (14) in Positionen, worin eine Druckplatte (18) auf dem genannten Platenzylinder (12) das eingefärbte Druckbild in dem Spalt (28) zwischen den genannten Zylindern (12, 14) auf das genannte hülsenförmige Gummituch (20) überträgt, wenn die genannten Zylinder (12, 14) rotiert werden;
einen Motor (26) zum Rotieren des genannten Plattenzylinders (12) und des genannten Gummituchzylinders (14) für das übertragen des eingefärbten Druckbildes auf das genannte hülsenförmige Gummituch (20); und
das genannte hülsenförmige Gummituch (20) ist in einer Weise auf dem Gummituchzylinder (14) gelagert, daß dieses in einem Verhältnis zu dem genannten Gummituchzylinder (14) rotiert, wenn die genannten Zylinder (12, 14) durch den genannten Motor (26) angetrieben werden.

2. Offsetdruckwerk (10) nach Anspruch 1,
**dadurch gekennzeichnet**,
daß der genannte Gummituchzylinder (14) eine erste, radial nach außen gerichtete Montagefläche (54) hat, das genannte hülsenförmige Gummituch (20) eine zweite, radial nach innen gerichtete Montagefläche (48) hat, die zweite Montagefläche (48) mit der genannten ersten Montagefläche (54) in Reibkontakt steht, und die genannte zweite Montagefläche (48) umfänglich relativ zu der genannten ersten Montagefläche (54) in Schiebekontakt mit dieser bewegbar ist, wenn die genannten Zylinder (12, 14) durch den genannten Motor (26) angetrieben werden.

3. Offsetdruckwerk (10) nach Anspruch 2,
**dadurch gekennzeichnet**,
daß das genannte hülsenförmige Gummituch (20) einen zylindrischen Druckbereich (42) und eine zylindrische Hülse (44) umfaßt, der genannte Druckbereich (42) eine kontinuierliche, spaltlose, zylindrische äußere Druckfläche (46) aufweist, und daß die genannte Hülse (44) den genannten, zylindrisch geformten Druckbereich (42) trägt und eine kontinuierliche, spaltlose zylindrische Innenfläche (48) aufweist, welche die genannte zweite Montagefläche ist.

4. Offsetdruckwerk (10) nach Anspruch 1,
**dadurch gekennzeichnet**,
daß der genannte Plattenzylinder (12) in den genannten Rahmen (16) in einer Position gelagert ist, worin eine Druckplatte (18) auf dem genannten Plattenzylinder (12) auf das genannte hülsenförmige Gummituch (20) in dem genannten Zylinderspalt (28) eine Kraft ausübt, wenn die genannten Zylinder (12, 14) durch den genannten Motor (26) rotiert werden, so daß das auf dem genannten Gummituchzylinder (14) lagernde hülsenförmige Gummituch (20) unter dem Einfluß der genannten, auf den genannten Zylinderspalt (28) ausgeübten Kraft in einem Verhältnis zu dem genannten Gummituchzylinder (14) rotiert.

5. Offsetdruckwerk (10) nach Anspruch 4, welches ferner umfaßt:
einen rotierbaren Druckzylinder (15), welcher durch die genannten Rahmen (16) in einer Position gelagert ist, worin eine Fläche auf dem genannten Druckzylinder (15) in dem Spalt (32) zwischen dem genannten Druckzylinder (15) und dem genannten Gummituchzylinder (14) eine Kraft auf das genannte hülsenförmige Gummituch (20) ausübt, so daß das genannte hülsenförmige Gummituch (20) unter dem Einfluß der genannten, in den genannten Zylinderspalten (28, 32) ausgeübten Kräfte in einem Verhältnis zu dem genannten Gummituchzylinder (14) rotiert.

6. Offsetdruckwerk (10) nach Anspruch 5,
**dadurch gekennzeichnet**,
daß der genannte Motor (26) den genannten Gummituchzylinder (14) in einer ersten Richtung um dessen Achse rotiert, und daß das genannte hülsenförmige Gummituch (20) in einer Weise auf dem genannten Gummituchzylinder (14) angebracht ist, so daß dieses unter dem Einfluß der genannten, in den genannten Zylinderspalten (28, 32) ausgeübten Kräfte in einem Verhältnis zu dem genannten Gummituchzylinder (14) in eine zweite Richtung entgegen der genannten ersten Richtung rotiert.

7. Verfahren des Druckens mit einem Offsetdruckwerk (10), welches die folgenden Merkmale umfaßt:
einen rotierbaren Plattenzylinder (12) mit einer Druckplatte (18), auf welcher ein eingefärbtes Druckbild festgelegt ist, einen rotierbaren Gummituchzylinder (14), Rahmen (16) zum Lagern des Plattenzylinders (12) und des Gummituchzylinders (14) in Positionen, worin die Druckplatte (18) auf dem Plattenzylinder (12) in dem Spalt (28) zwischen den Zylindern (12, 14) das eingefärbte Druckbild auf ein auf dem Gummituchzylinder (14) befindliches Gummituch (20) überträgt, wenn die Zylinder (12, 14) rotiert werden, und einen Motor (26) für den Antrieb des Plattenzylinders (12) und des Gummituchzylinders (14) zur übertragung des eingefärbten Druckbildes auf den Gummituchzylinder (20), wobei das genannte Verfahren die folgenden Schritte umfaßt:
das Anbringen eines hülsenförmigen Gummituchs (20) auf dem Gummituchzylinder (14) durch das teleskopische Bewegen des hülsenförmigen Gummituchs (20) über den Gummituchzylinder (14); und
das Rotieren des hülsenförmigen Gummituchs (20) in einem Verhältnis zu dem Gummituchzylinder (14), wenn der Plattenzylinder (12) und der Gummituchzylinder (14) zur übertragung des eingefärbten Druckbilds auf das hülsenförmige Gummituch (20) durch den Motor (26) angetrieben werden.

8. Verfahren nach Anspruch 7,
**dadurch gekennzeichnet**,
daß der genannte Plattenzylinder (12) und der genannte Gummituchzylinder (14) durch den genannten Motor (26) mit gleicher Drehzahl pro Minute angetrieben werden, und daß das genannte hülsenförmige Gummituch (20) in einem Verhältnis zu dem genannten Gummituchzylinder (14) rotiert wird, wenn der genannte Plattenzylinder (12) und der genannte Gummituchzylinder (14) mit der genannten gleichen Drehzahl angetrieben werden.

9. Verfahren nach Anspruch 7,
**dadurch gekennzeichnet**,
daß das genannte hülsenförmige Gummituch (20) auf dem genannten Gummituchzylinder (14) mit einer Reibkraft angebracht ist, die einer umfänglichen Bewegung des genannten hülsenförmigen Gummituchs (20) in Schiebekontakt mit dem genannten Gummituchzylinder (14) widersteht, und daß sich das genannte hülsenförmige Gummituch (20) unter dem Einfluß von auf dessen Außenfläche ausgeübtem Druck umfänglich in Schlebekontakt mit dem genannten Gummituchzylinder (14) bewegt.

## Claims

1. Offset printing unit (10) for printing an inked print image onto a sheet material web (30), exhibiting the following features:
a rotatable plate cylinder (12) having a mechanism (19) for clamping in place a printing plate (18) on which an inked print image is defined;
a rotatable blanket cylinder (14);
a sleeve-shaped rubber blanket (20), which is fitted telescopically over the said blanket cylinder (14);
frames (16) for holding the said plate cylinder (12) and the said blanket cylinder (14) in positions in which a printing plate (18) on the said plate cylinder (12) transfers the inked print image in the nip (28) between the said cylinders (12, 14) onto the said sleeve-shaped rubber blanket (20), whenever the said cylinders (12, 14) are rotated;
a motor (26) for rotating the said plate cylinder (12) and the said blanket cylinder (14) for the transfer of the inked print image onto the said sleeve-shaped rubber blanket (20); and
the said sleeve-shaped rubber blanket (20) is mounted on the blanket cylinder (14) in such a way that the latter rotates in a relationship to the said blanket cylinder (14) whenever the said cylinders (12, 14) are driven by the said motor (26).

2. Offset printing unit (10) according to Claim 1, characterized in that the said blanket cylinder (14) has a first mounting surface (54) directed radially outwards, the said sleeve-shaped rubber blanket (20) has a second mounting surface (48) directed radially inwards, the second mounting surface (48) is in friction contact with the said first mounting surface (54) and the said second mounting surface (48) can be moved peripherally relative to the said first mounting surface (54), in sliding contact with the latter, whenever the said cylinders (12, 14) are driven by the said motor (26).

3. Offset printing unit (10) according to Claim 2, characterized in that the said sleeve-shaped rubber blanket (20) comprises a cylindrical printing zone (42) and a cylindrical sleeve (44), the said printing zone (42) exhibits a continuous, gapless, cylindrical outer printing surface (46) and in that the said sleeve (44) supports the said cylindrically shaped printing zone (42) and exhibits a continuous, gapless cylindrical inner surface (48), which is the said second mounting surface.

4. Offset printing unit (10) according to Claim 1, characterized in that the said plate cylinder (12) is mounted in the said frames (16) in a position in which a printing plate (18) on the said plate cylinder (12) exerts a force upon the said sleeve-shaped rubber blanket (20) in the said nip (28) whenever the said cylinders (12, 14) are rotated by the said motor (26), so that the sleeve-shaped rubber blanket (20) mounted on the said blanket cylinder (14), under the influence of the said force exerted upon the said nip (28), rotates in a relationship to the said blanket cylinder (14).

5. Offset printing unit (10) according to Claim 4, which further comprises:
a rotatable impression cylinder (15), which is held by the said frames (16) in a position in which a surface on the said impression cylinder (15), in the nip (32) between the said impression cylinder (15) and the said blanket cylinder (14), exerts a force upon the said sleeve-shaped rubber blanket (20), so that the said sleeve-shaped rubber blanket (20), under the influence of the said forces exerted in the said nips (28, 32), rotates in a relationship to the said blanket cylinder (14).

6. Offset printing unit (10) according to Claim 5, characterized in that the said motor (26) rotates the said blanket cylinder (14) in a first direction about its axis and in that the said sleeve-shaped rubber blanket (20) is fitted on the said blanket cylinder (14) in such a way that the latter, under the influence of the said forces exerted in the said nips (28, 32), rotates in a relationship to the said blanket cylinder (14) into a second direction counter to the said first direction.

7. Printing process using an offset printing unit (10) comprising the following features:
a rotatable plate cylinder (12) having a printing plate (18) on which an inked print image is defined, a rotatable blanket cylinder (14), frames (16) for holding the plate cylinder (12) and the blanket cylinder (14) in positions in which the printing plate (18) on the plate cylinder (12), in the nip (28) between the cylinders (12, 14), transfers the inked print image onto a rubber blanket (20) located on the blanket cylinder (14) whenever the cylinders (12, 14) are rotated, and a motor (26) for driving the plate cylinder (12) and the blanket cylinder (14) in order to transfer the inked print image onto the blanket cylinder (20), the said process comprising the following steps:
the fitting of a sleeve-shaped rubber blanket (20) on the blanket cylinder (14) by the telescopic movement of the sleeve-shaped rubber blanket (20) over the blanket cylinder (14); and
the rotation of the sleeve-shaped rubber blanket (20) in a relationship to the blanket cylinder (14) whenever the plate cylinder (12) and the blanket cylinder (14) are driven by the motor (26) in order to transfer the inked print image onto the sleeve-shaped rubber blanket (20).

8. Process according to Claim 7, characterized in that the said plate cylinder (12) and the said blanket cylinder (14) are driven by the said motor (26) at the same revolutions per minute and in that the said sleeve-shaped rubber blanket (20) is rotated in a relationship to the said blanket cylinder (14) whenever the said plate cylinder (12) and the said blanket cylinder (14) are driven at the said same rotation speed.

9. Process according to Claim 7, characterized in that the said sleeve-shaped rubber blanket (20) is fitted on the said blanket cylinder (14) with a friction force which resists a peripheral movement of the said sleeve-shaped rubber blanket (20) in sliding contact with the said blanket cylinder (14) and in that the said sleeve-shaped rubber blanket (20), under the influence of pressure exerted upon its outer surface, moves peripherally in sliding contact with the said blanket cylinder (14).

## Revendications

1. Groupe imprimant offset (10) pour l'impression d'une image imprimante colorée encrée sur une bande de matière en feuille (30) qui présente les caractéristiques suivantes : un cylindre porte-plaque tournant (12) équipé d'un mécanisme (19) pour caler une plaque d'impression (18), sur laquelle est établie une image imprimante encrée ;
un cylindre porte-blanchet tournant (14) ;
un blanchet (20) en forme de manchon, qui est monté télescopiquement sur ledit cylindre porte-blanchet (14) ;
des bâtis (16) pour le tourillonnement dudit cylindre porte-plaque (12) et dudit cylindre porte-blanchet (14) dans des positions dans lesquelles une plaque d'impression (18) montée sur ledit cylindre porte-plaque (12) reporte l'image imprimante encrée sur ledit blanchet (20) en forme de manchon, dans la fente (28) formée entre lesdits cylindres (12, 14) lorsque lesdits cylindres (12, 14) sont mis en rotation ;
un moteur (26) servant à faire tourner ledit cylindre porte-plaque (12) et ledit cylindre porte-blanchet (14) pour effectuer le report de l'image imprimante encrée sur ledit blanchet en forme de manchon ; et
ledit blanchet en forme de manchon (20) est monté sur le cylindre porte-blanchet (14) de telle manière que ce blanchet tourne par rapport audit cylindre porte-blanchet lorsque lesdits cylindres (12, 14) sont entraînés par ledit moteur (26).

2. Groupe imprimant offset (10) selon la revendication 1,
caractérisé
en ce que ledit cylindre porte-blanchet (14) a une première surface de montage (54) dirigée radialement vers l'extérieur, le blanchet (20) en forme de manchon a une deuxième surface de montage (48) dirigée radialement vers l'intérieur, la deuxième surface de montage (48) est en contact de friction avec ladite première surface de montage (54) et ladite deuxième surface de montage (48) peut se déplacer circonférentiellement par rapport à ladite surface de montage (54), en contact de translation avec celle-ci, lorsque lesdits cylindres (12, 14) sont entraînés par ledit moteur (26).

3. Groupe imprimant offset (10) selon la revendication 2,
caractérisé
en ce que ledit blanchet en forme de manchon (20) comprend une région d'impression cylindrique (42) et un manchon cylindrique (44), ladite région d'impression (42) présente une surface d'impression (46) cylindrique extérieure, continue dépourvue de fente, et ledit manchon (44) porte ladite région d'impression (42) mise à une forme cylindrique, et présente une surface interne (48) cylindrique, continue, dépourvue de fente, qui est ladite deuxième surface de montage.

4. Groupe imprimant offset (10) selon la revendication 1,
caractérisé
en ce que ledit cylindre porte-plaque (12) est tourillonné dans lesdits bâtis (16) dans une position dans laquelle une plaque d'impression (18) montée sur ledit cylindre porte-plaque (12) exerce une force sur ledit blanchet (20) en forme de manchon dans ladite fente (28) entre cylindres lorsque lesdits cylindres (12, 14) sont entraînés en rotation par ledit moteur (26) de telle manière que le blanchet en forme de manchon (20) monté sur ledit cylindre porte-blanchet (14) tourne par rapport audit cylindre porte-blanchet (14) sous l'influence de ladite force exercée sur ladite fente (28) entre cylindres.

5. Groupe imprimant offset (10) selon la revendication 4,
qui comprend en outre :
un cylindre d'impression tournant (15) qui est tourillonné par lesdits bâtis (16) dans une position dans laquelle une surface formée sur ledit cylindre d'impression (15) exerce une force sur ledit blanchet en forme de manchon (20) dans la fente (32) entre ledit cylindre d'impression (15) et ledit cylindre porte-blanchet (14), de sorte que ledit blanchet en forme de manchon (20) tourne par rapport audit cylindre porte-blanchet (14) sous l'influence desdites forces exercées dans lesdites fentes (28, 32) entre cylindres.

6. Groupe imprimant offset (10) selon la revendication 5,
caractérisé
en ce que ledit moteur (26) fait tourner ledit cylindre porte-blanchet (14) autour de son axe dans un premier sens et en ce que ledit blanchet (20) en forme de manchon est monté sur ledit cylindre porte-blanchet (14) de telle manière que ce blanchet tourne par rapport audit cylindre porte-blanchet (14) dans un deuxième sens inverse dudit premier sens sous l'influence desdites forces exercées dans lesdites fentes (28, 32) entre cylindres.

7. Procédé d'impression avec un groupe imprimant offset (10), qui possède les caractéristiques suivantes :
un cylindre porte-plaque tournant (12) équipé d'une plaque d'impression (18) sur laquelle est formée une image imprimante encrée, un cylindre porte-blanchet tournant (14), des bâtis (16) pour le tourillonnement du cylindre porte-plaque (12) et du cylindre porte-blanchet (14) dans des positions dans lesquelles, dans la fente (28) entre les cylindres (12, 14), la plaque d'impression (18) portée par le cylindre porte-plaque (12) reporte l'image imprimante encrée sur un blanchet (20) qui se trouve sur le cylindre porte-blanchet (14) lorsque le cylindre (12, 14) est entrainé en rotation, et un moteur (26) servant à entraîner le cylindre porte-plaque (12) et le cylindre porte-blanchet (14) pour assurer le report de l'image imprimante encrée sur le cylindre porte-blanchet (20), le procédé selon l'invention comprenant les phases suivantes :
le montage du blanchet en forme de manchon (20) sur le cylindre porte-blanchet (14) par emmanchement télescopique du blanchet (20) en forme de manchon sur le cylindre porte-blanchet (14) ; et
l'entraînement en rotation du blanchet (20) en forme de manchon par rapport au cylindre porte-blanchet (14) lorsque le cylindre porte-plaque (12) et le cylindre porte-blanchet (14) sont entraînés par le moteur (26) pour assurer le report de l'image imprimante encrée sur le blanchet (20) en forme de manchon.

8. Procédé selon la revendication 7,
caractérisé
en ce que ledit cylindre porte-plaque (12) et ledit cylindre porte-blanchet (14) sont entraînés par ledit moteur (26) au même nombre de tours par minute, et en ce que ledit blanchet (20) en forme de manchon est entraîné en rotation par rapport audit cylindre porte-blanchet (14) lorsque ledit cylindre porte-plaque (12) et ledit cylindre porte-blanchet (14) sont entraînés audit nombre de tours identique pour les deux.

9. Procédé selon la revendication 7,
caractérisé
en ce que ledit blanchet (20) en forme de manchon est monté sur ledit cylindre porte-blanchet (14) avec une force de frottement qui résiste à un mouvement périphérique dudit blanchet (20) en forme de manchon en contact de translation avec ledit cylindre porte-blanchet (14) et en ce que ledit blanchet en forme de manchon (20) se déplace circonférentiellement en contact de translation avec ledit cylindre porte-blanchet (14) sous l'influence de la pression exercée sur sa surface extérieure.
